# EUROPEAN PATENT APPLICATION

(11) **EP 3 108 757 A1**
(43) Date of publication of application: **28.12.2016**
(21) Application number: 15173241.9
(22) Date of filing: 23.06.2015
(51) Int. Cl.: A24B 7/14, A24C 5/39, B65G 15/08

(54) **SYSTEM OF DEVICES FOR A TOBACCO INDUSTRY PRODUCTION INSTALLATION**

(71) Applicant: International Tobacco Machinery Poland Sp. z o.o., 26-600 Radom (PL)
(72) Inventor: Cepinski, Piotr, 26-600 Radom (PL); Pydys , Pawe, 20-140 Lublin (PL); Kowalski, Marcin, 26-613 Rajec Szlachecki (PL)
(74) Representative: Patpol Kancelaria Patentowa Sp. z o.o.

(57) **Abstract**

A system of devices for a tobacco industry production installation comprising a feeding device (1) for delivering tobacco material (2, 12), at least one tobacco material transporter (3, 13) and a receiving device (5, 8) for collecting the tobacco material, characterized in that the at least one tobacco material transporter (3, 13) is a belt-tube conveyor.

## Description

The invention relates to a system of devices for a tobacco industry production installation.

Diverse types of installations are used in tobacco industry for treatment and processing of tobacco material in the form of shredded tobacco or tobacco leaves undergoing treatment and shredding. The material in the form of the shredded tobacco prepared for production is fed to cigarette machines.

In the tobacco industry, systems are also used in which the shredded tobacco is delivered to the cigarette machines batchwise and by means of carriages. Such systems have been disclosed, among others in EP 0 375 631 A1 and EP 0 646 329. Systems using pneumatic transporters are commonly used, in which tobacco shredded tobacco feeders and cigarette machines are connected via numerous channels of diverse lengths depending of the arrangement of the machines within the production installation. Such pneumatic feeding systems are known from the documents GB 1 164 658, DE 102 09 710 A1, A shortcoming of such transport systems is that the tobacco material is permanently ventilated which results in a change of its aromatic characteristics. The pneumatic transport may also cause mechanical damage of the tobacco material leading to formation of tobacco dust.

It is an object of the present invention to provide a system of devices enabling continuous delivery of tobacco material without exposing the tobacco material to damaging mechanical loads and to a risk of aroma loss.

The system of devices for a tobacco industry production installation according to the invention comprises a feeding device for delivering tobacco material, at least one tobacco material transporter and a receiving device for collecting the tobacco material.

The system according to the invention is characterized in that the at least one tobacco material transporter is a belt-tube conveyor.

Preferably, the belt-tube conveyor includes an endless belt comprising an intake section for collecting the tobacco material from the feeding device, a conveyor section and a discharge section for delivering the tobacco material to the receiving device, the endless belt being flat within the intake section, tubular within the conveyor section and flat within the discharge section, a return section being comprised between the discharge section and the intake section of the endless belt.

The return section of the belt may be flat.

The device receiving the tobacco material is preferably a cigarette producing machine or a tobacco cutting machine.

Preferably, the return section of the conveyor is provided with at least one belt cleaning assembly.

The belt cleaning assembly may comprise rotatable brushes.

An assembly for redirecting unused tobacco material to the feeding device may preferably be located between the discharge section and the receiving device.

Preferably, the assembly for redirecting the unused tobacco material comprises a rotatable deflector and a return conveyor.

Preferably, the return conveyor is an additional belt conveyor.

In one embodiment of the invention, the return section is flat within its intake section, tubular within its conveyor section and flat within its discharge section which delivers the tobacco material back to the feeding device, the system being provided with an assembly for redirecting the unused tobacco material from said discharge section to said intake section of the return section of the endless belt.

Preferably, the conveyor section extends at an angle to the horizontal.

The system according to the invention may be provided with guides by means of which the longitudinal edges of the belt are continuously raised between the intake section and the conveyor section, while they are continuously lowered between the conveyor section and the discharge section.

In the conveyor section the longitudinal edges of the belt may be mutually overlapping or drawn close to each other or else they may be engaged with each other.

The drawn close to each other edges of the belt may be arranged in supporting members and maintained by means of guiding rollers cooperating with the supporting members.

The belt is preferably made of a flexible material e.g f polyolefine.

The present the invention is presented in exemplary embodiments in the appended drawing, in which:
Fig. 1 shows a schematic diagram of a first embodiment of the system of devices according to the invention in a side view;
Figs. 2a, 2b, 2c, 2d show respective vertical sections of the conveyor belt with the guides in different sections of the conveyor;
Fig. 3 shows a schematic diagram of another embodiment of the system of devices according to the invention in a side view;
Fig. 4 shows a schematic diagram of still another embodiment of the system of devices according to the invention in a side view;
Fig. 5 shows a schematic diagram of still another embodiment of the system of devices according to the invention in a side view;
Figs. 6a, 6b show vertical sections of the conveyor belt the edges of which are located in supporting members;
Fig. 7 shows a schematic diagram of the embodiment of the system of devices according to the invention shown in fig. 1, in a top view;
Fig. 8 shows a schematic diagram of the embodiment of the system of devices according to the invention shown in fig. 5, in a top view.

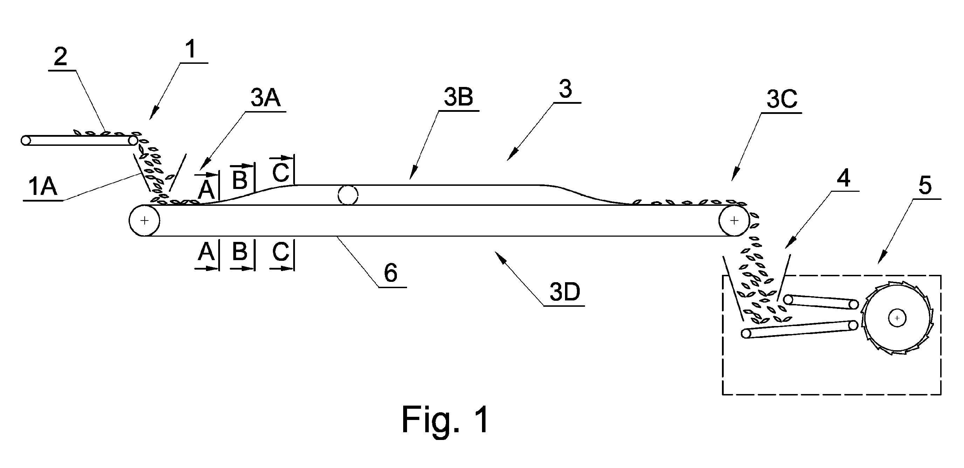

An embodiment of the system of devices for a tobacco industry production installation shown in fig. 1 comprises a feeding device 1 for delivering tobacco leaves 2, a transporter for the tobacco material and a tobacco cutting machine 5 for cutting the tobacco leaves 2, the tobacco cutting machine being provided with a discharge container 4. The transporter has a form of a belt-tube conveyor 3 and it includes an intake section 3A, a conveyor section 3B, a discharge section 3C and a return section 3D. In the intake section 3A the belt 6 of the conveyor 3 is laid flat so that its supporting surface 3A is open and presents a straight line in a cross sectional view; then it is being transformed into an arc in a cross-sectional view, the curvature of the arc increasing along the belt.

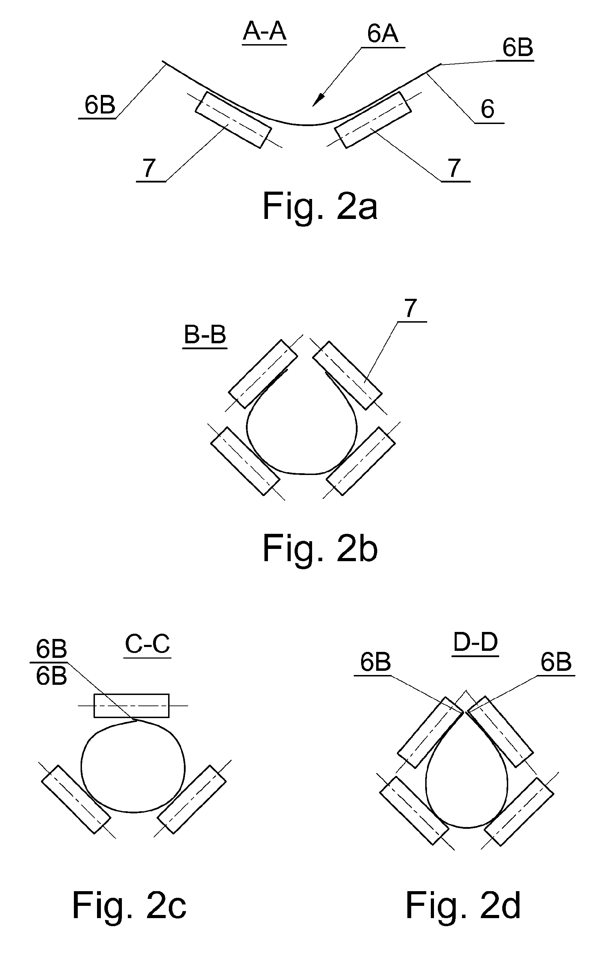

A discharge chute 1A of the feeding device 1 is located above the intake section 3A. The belt 6 is being formed into a tube in the conveyor section 3B, the tube having a substantially closed cross-section (indicated by a dotted line as a circle), the transmission from the open intake section 3A into the closed tubular conveyor section 3B being realized continuously by means of guides or rollers 7. The rollers 7 shown in figs. 2a, 2b, 2c and 2d may be driving rollers and/or idle rollers. Fig. 2a shows a next phase of the forming of the belt, while figs. 2c and 2d show a cross-section of the belt formed substantially as a circle or alternatively as a droplet. The edges 6B of the belt 6 may be overlapping or drawn close to each other or else they may be engaged with each other.

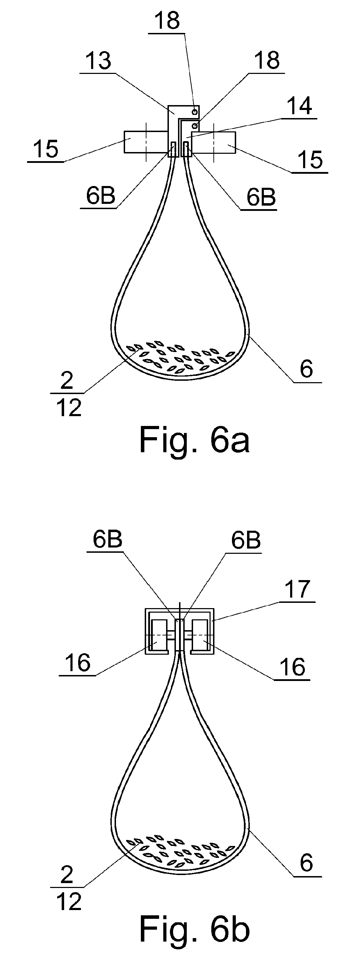

The edges of the belt 6 may be provided with snap fasteners for immobilizing the edges 6B in relations to each other; they may also be maintained close to each other by means of the guiding rollers, as shown e.g. in figs. 6a and 6b. The conveyor section 3B may extend along a straight line, along lengths oriented at an angle to each other, or along at least one arc. In the discharge section 3C the cross-section of the belt 6 is being transformed from the circle into an arc and it finally becomes a straight line again, the other way round in relation to the transformation shown in figs. 2a, 2b, 2c or 2d. The discharge section 3C is located above the inlet of the discharge container 4 of the tobacco cutting machine 5.

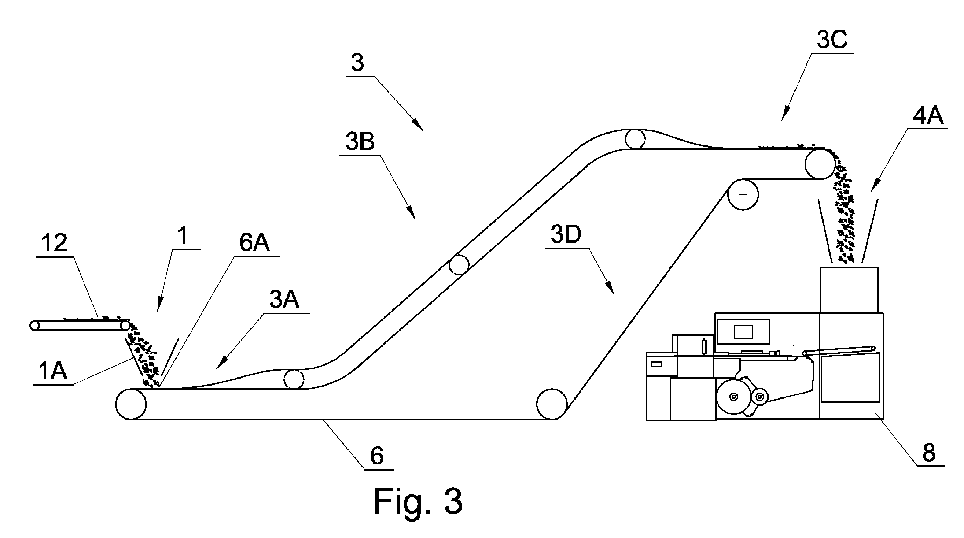

Fig. 3 presents a slightly different embodiment of the invention in which the conveyor section 3B of the belt conveyor 3 consists of two horizontal lengths and one length oriented at an angle to the horizontal. All the lengths of the section 3B are preferably equipped with the guides and/or rollers. The intake section 3A and the discharge section 3C are formed similarly to the first embodiment. In the currently described embodiment the shredded tobacco is delivered to a cigarette machine 8.

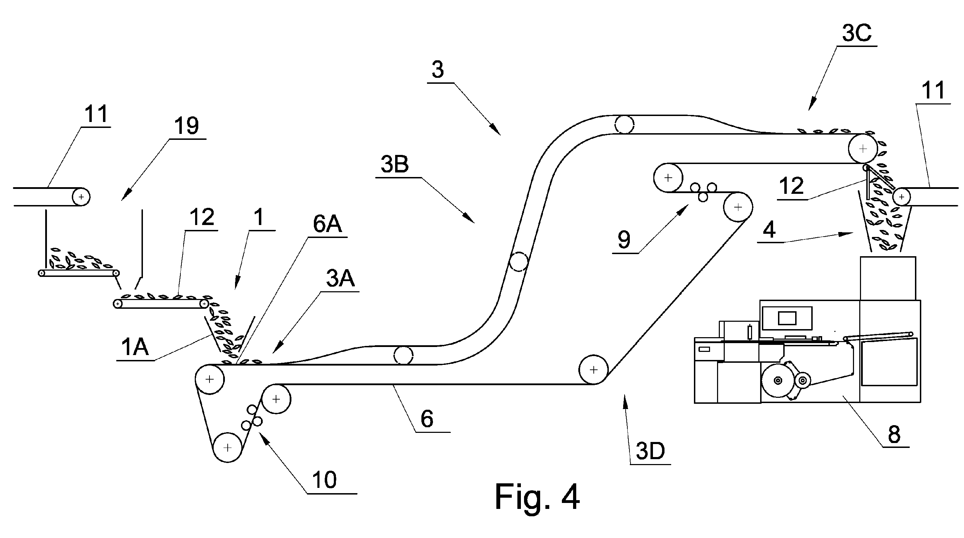

In the next embodiment shown in fig. 4 the system of devices constituting a part of a tobacco industry production installation comprises a feeding device 1 for delivering the shredded tobacco 12, a transporter in the form of a belt-tube conveyor 3 and a cigarette machine 8 provided with a discharge container 4. Similarly to the above described embodiments, the conveyor includes an intake section 3A, a conveyor section 3B, a discharge section 3C and a return section 3D. A discharge chute 1A of the feeding device 1 is located above the intake section 3A. The discharge section is located above the inlet of the discharge container 4 of the cigarette machine 8.

In this embodiment, downstream the discharge section 3C the belt 6 proceeds to the return section 3D which is equipped with a cleaning assembly 9 preferably comprising rotatable brushes. The cleaning of the belt may include cleaning with water or another cleaning means. The shown production installation may further be provided with another cleaning assembly 10, downstream of which the belt re-enters the intake section 3A.

The shredded tobacco 12 is delivered to the discharge container 4 of the cigarette machine 8. In the embodiment shown in fig. 4, the system is further provided with a return conveyor 11. When the cigarette machine stops operating permanently or temporarily, the shredded tobacco 12 laying on the conveyor 3 may be picked up by the return conveyor 11. In this embodiment, the shredded tobacco 12 is directed to the return conveyor 11 by means of a rotatable deflector 12 driven by e.g. a pneumatic actuator (not shown). The position of the deflector 12 in which the shredded tobacco 12 is directed to the return conveyor 11 is shown by a dotted line.

The return conveyor 11 transfers the unused shredded tobacco 12 into a storage means 19 of any suitable type, the return conveyor 11 having been shown partially on the right side of fig. 4, below the section 3c, and partially on the left side of fig. 4, above the storage means 19. The shredded tobacco 12 collected in the storage means 19 is delivered to the feeding device 1.

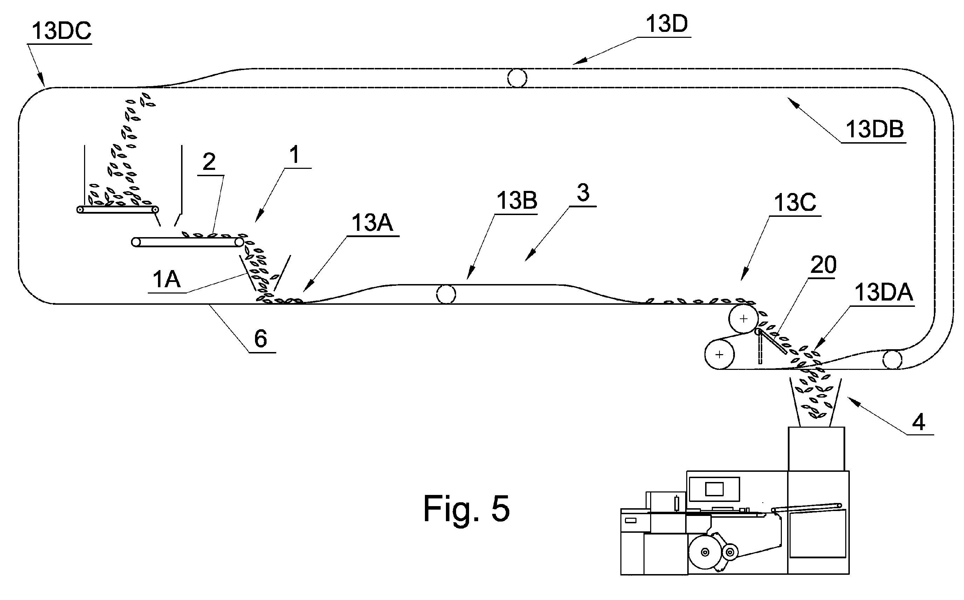

Fig. 5 shows a schematic diagram of still another embodiment of the system according to the invention. Here the return section 13D is also a belt-tube conveyor and includes an intake section 13DA, a conveyor section 13DB, a discharge section 13DC, that are similar to the sections 3A, 3B i 3C of the conveyor 3 in figs. 1, 3 i 4. In this embodiment, for the sake of clarity, the return section 13D is shown in fig. 5 above the sections 13A, 13B, 13C; in reality it forms a full loop with the other sections of the conveyor which is situated in one and the same plane e.g. a substantially horizontal plane.

Fig. 6a shows an example of how the belt 6 may be closed by drawing its edges 6B close to each other and maintaining them so while the tobacco material 2, 12 is being transported within the belt. The edges 6B are arranged in supporting members 13, 14 and they may be welded, riveted or sawn thereto. During the transport, the supporting members 13, 14 are pressed to each other by means of guiding rollers 15. The guiding rollers 15 shown in Fig. 6a have vertical axes of rotation. The supporting member may also have a form of wedges, the guiding rollers having in such case their axes correspondingly inclined (not shown). Both members 13 and 14 may be provided with cords 18 e.g. of steel or plastic, in order to reinforce the belt 6 and to bear the longitudinal loads exerted on the belt 6.

Fig. 6b shows another variant of the way of maintaining the edges 6B. The rollers 16 having horizontal axes of rotation are guided in a profile 17 formed as a "C" . The profile 17 provides both the pressure of the edges 6B against each other and guidance of the belt 6.

The belt is preferably made of a flexible material enabling the belt-tube conveyor to follow a curved route in a limited space. Such a material may be e.g. polyolefine.

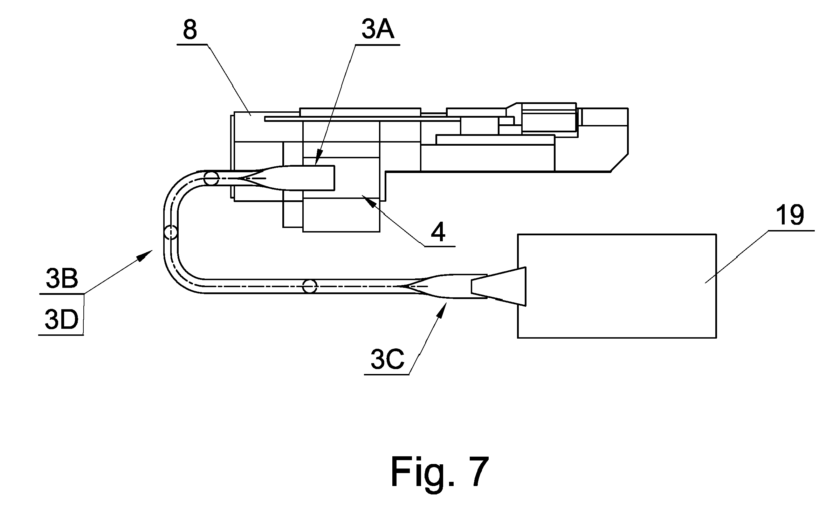

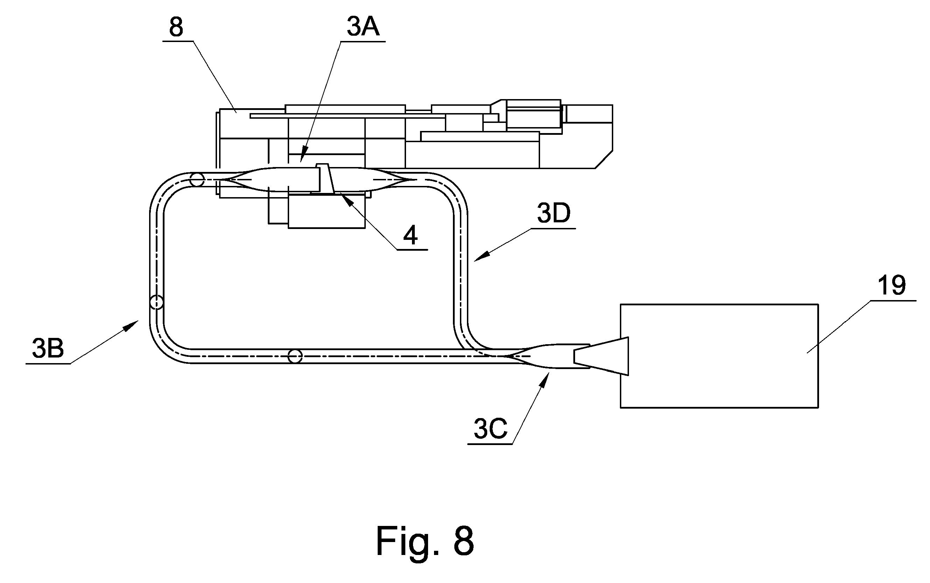

Fig. 7 shows the system of machines of fig. 1 in a top view, in which the route of the conveyor section 3B and the return section 3D overlap each other. Fig. 8 shows a top view of the system of machines of fig. 5.

## Claims

1. A system of devices for a tobacco industry production installation comprising a feeding device for delivering tobacco material, at least one tobacco material transporter and a receiving device for collecting the tobacco material, **characterized in that** the at least one tobacco material transporter is a belt-tube conveyor (3, 13).

2. The system according to claim 1, **characterized in that** the belt-tube conveyor (3, 13) includes an endless belt (6) comprising an intake section (3A, 13A) for collecting the tobacco material from the feeding device (1), a conveyor section (3B, 13B) and a discharge section (3C, 13C) for delivering the tobacco material to the receiving device (5, 8), the endless belt (6) being flat within the intake section (3A, 13A), tubular within the conveyor section (3B, 13B) and flat within the discharge section (3C, 13C), a return section (3D, 13D) being comprised between the discharge section (3C, 13C) and the intake section (3A, 13A) of the endless belt (6).

3. The system according to claim 1 or 2, **characterized in that** the return section (3D) of the belt (6) is flat.

4. The system according to claim 1 or 2, **characterized in that** the receiving device for receiving the tobacco material is preferably a cigarette producing machine (5) or a tobacco cutting machine (8).

5. The system according to claim 3, **characterized in that** the return section (3D) of the conveyor (3) is provided with at least one belt cleaning assembly (9, 10).

6. The system according to claim 5, **characterized in that** the belt cleaning assembly (9, 10) comprises rotatable brushes.

7. The system according to claim 2 or 3, **characterized in that** an assembly for redirecting unused tobacco material to the feeding device (1) is located between the discharge section (3C, 13C) of the belt (6) and the receiving device (5, 8).

8. The system according to claim 7, **characterized in that** the assembly for redirecting the unused tobacco material comprises a rotatable deflector (12) and a return conveyor.

9. The system according to claim 8, **characterized in that** the return conveyor is an additional belt conveyor (11).

10. The system according to claim 2, **characterized in that** the return section (13D) of the belt (6) is flat within its intake section (13DA), tubular within its conveyor section (13DB) and flat within its discharge section (13DC) which delivers the tobacco material back to the feeding device (1), the system being provided with an assembly for redirecting the unused tobacco material from said discharge section (13DC) to said intake section (13DA) of the return section (13DA) of the endless belt (6).

11. The system according to claim 2 or 10, **characterized in that** the conveyor section (3B, 13B, 13DB) of the belt (6) extends at an angle to the horizontal.

12. The system according to claim 2 or 10, **characterized in that** it is provided with guides (7) by means of which the longitudinal edges (6B) of the belt (6) are continuously raised between the intake section (3A, 13A, 13DA) and the conveyor section (3B, 13B, 13DB), while they are continuously lowered between the conveyor section (3B, 13B, 13DB) and the discharge section (3C, 13C, 13DC).

13. The system according to claim 2, **characterized in that** in the conveyor section (3B, 13B, 13DB) the longitudinal edges (6B) of the belt (6) are mutually overlapping or drawn close to each other.

14. The system according to claim 13, **characterized in that** the drawn close to each other edges (6B) of the belt (6) are arranged in supporting members (13, 14) and maintained by means of guiding rollers (15, 16) cooperating with the supporting members (13, 14).

15. The system according any of the preceding claims, **characterized in that** the belt (6) is made of a flexible material e.g. polyolefine.
